# EUROPÄISCHE PATENTANMELDUNG

(11) **EP 0 763 399 A1**
(43) Veröffentlichungstag der Anmeldung: **19.03.1997**
(21) Anmeldenummer: 95120385.0
(22) Anmeldetag: 22.12.1995
(51) Int. Cl.: B23K 35/365

(54) **Elektrode zum Schweissen von kohlenstoffarmen und niedriglegierten Stahlsorten**

(30) Priorität: 13.09.1995 RU 95115245
(71) Anmelder: NATUNICOM TRADING LIMITED, Ay. Spyridonas, Limassol (CY)
(72) Erfinder: Ioffe, Iossif Samuilowitsch, Dr., 129337 Moskau (RU); Gavrilin, Juri Michailowitsch, 129337 Moskau (RU)
(74) Vertreter: Werner, Hans-Karsten, Dr.Dipl.-Chem.

(57) **Zusammenfassung**

Gegenstand der vorliegenden Erfindung ist eine umhüllte Elektrode zum Elektroschweißen von kohlenstoffarmen und niedriglegierten Stahlsorten mit einem kohlenstoffarmen und niedriglegierten Draht und eine Umhüllung aus Carbonat, Silikaten, TiO₂-haltige Komponenten, vorzugsweise Ilmenit, Cellulose, eisenhaltige Komponenten, Ferromangan und gegebenenfalls Ferrotitan.

## Beschreibung

Gegenstand der vorliegenden Erfindung ist eine umhüllte Elektrode zum Schweißen von kohlenstoffarmen und niedriglegierten Stahlsorten.

Bekannt sind die Zusammensetzungen von Elektrodenumhüllungen wie sie z.B. bei der Herstellung von Rutilelektroden gemäß SU-Urheberschein Nr. 539724 (1977) verwendet wurden.

Diese Umhüllungen sind durch Verwendung von Ferrotitan (30 bis 40 %) und Hämatit (30 bis 35 %) umweltverträglich und entsprechen der Struktur der Elektroden des Typs ZM-7 (russische Elektrode mit 33 % Hämatit, 30 % Ferromangan, 33 % Granit, 4 % Stärke, Umhüllungskoeffizient 37 bis 45 %). Jedoch hinsichtlich ihrer schweiß-technologischen Eigenschaften weisen diese Elektroden eine schlechtere Qualität auf als herkömmliche Rutilelektroden z.B. des Typs MR-3 (russische Elektrode mit 50 % Rutil, 18 % Marmor, 15 % Ferromangan, 10 % Talk, 5 % Kaolin und 1 bis 2 % Cellulose, Umhüllungskoeffizient 37 bis 45 %).

Bekannt sind auch die Zusammensetzungen der Elektrodenumhüllungen, die bei der Herstellung von Rutilelektroden gemäß SU-Urheberscheinen Nr. 719840 (1978) und Nr. 933336 (1980) benutzt wurden und in die Ferrotitan sowie eine eisenhaltige Komponente eingebaut worden war, um die schweiß-technologischen Eigenschaften zu verbessern. In diesen Elektrodenumhüllungen wurde als Hauptkomponente Ilmenit verwendet, die Qualität war jedoch schlechter als bei Elektroden mit Rutil-haltiger Umhüllung.

Die Erfindung hat sich somit die Aufgabe gestellt, Elektroden für das Elektroschweißen von kohlenstoffarmen und niedriglegierten Stahlsorten bereitzustellen, die gleich gute oder bessere schweiß-technologische Eigenschaften besitzen als die bisher bekannten Elektroden.

Dabei sollten alle mechanischen Parameter des Metalls im der Schweißnaht mindestens erhalten bleiben. Außerdem sollten die Herstellungskosten der Elektrode gesenkt sowie die Umweltverträglichkeit verbessert werden. Vorzugsweise sollten dabei einfach zugängliche Rohstoffe zur Anwendung kommen.

Diese Aufgabe wird überraschenderweise dadurch gelöst, daß die Elektrode aus einem kohlenstoffarmen und niedriglegierten Draht besteht sowie aus einer Umhüllung, die 0 bis 15 %, vorzugsweise 1 bis 10 % Carbonat, 1 bis 25 %, vorzugsweise 8 bis 18 % Silicat, 1 bis 8 % Cellulose, 0 bis 12 %, vorzugsweise 4 bis 9 % eisenhaltige Komponenten sowie Ferromangan, Ferrosilicium, gegebenenfalls Ferrotitan und ein TiO₂-haltige Komponente enthält. Bei einem Umhüllungsmasse-Koeffizienten von 32 bis 45 % ist Ferromangan in einer Menge vorhanden, daß ein Mangangehalt in der Elektrode von 1,6 bis 3,0 % resultiert, Ferrosilicium in einer Menge vorhanden, daß ein Siliciumgehalt von 0,3 bis 2,5 % resultiert und Ferrotitan in einer Menge vorhanden, daß ein Titangehalt in der Elektrode von insgesamt bis zu 1,5 % resultiert.

Der Einbau von Mangan und Silicium in das Metall der Schweißnaht durch den Stab und nicht durch die Umhüllung ist effektiver, weil dadurch der Übergangskoeffizient dieser Elemente erhöht wird.

Zur Gewährleistung ausreichender Mengen an Mangan und Silicium im Metall ist es erforderlich eine geringere Menge dieser Elemente in die Elektrode (d.h. in die Umhüllung und in den Stab) einzuführen.

Als weitere Vorteile sind zu erwähnen, daß durch die Einführung von Ferrotitan in die Umhüllung das Oxidationspotential gesenkt wird, so daß ein erhöhter Übergang von Mangan und Silicium in die Schweißnaht erfolgt. Außerdem erhöht das Titan im Ferrotitan bei der Oxidation die Menge von Titandioxid in der Schlacke. Dadurch werden die formenden Eigenschaften deutlich verbessert sowie die Neigung der Abtrennung vom Metall der Schweißnaht bis zur Selbstabtrennung.

Die Einführung von eisenhaltigen Komponenten wie Hämatit und/oder Magnetit in genau definierten geringen Mengen führt zur Erhöhung der Stabilität beim Brennen des Lichtbogens, Verbesserung beim Aufbau der Schweißnaht und der Schlacke sowie besonders bei der Abtrennbarkeit der Schlacke.

Als Silikate werden Muskovit und/oder Talk und/oder Phlogopit und/oder Kaolin verwendet. Als Carbonate werden Marmor und/oder Magnesit und/oder Dolomit und/oder Kalk verwendet. Überraschenderweise ist es möglich und sogar bevorzugt, als TiO₂-haltige Komponente das preiswerte Ilmenit zu verwenden.

In den nachfolgenden Beispielen sind erfindungsgemäße Elektroden zum Elektroschweißen näher erläutert, die als Chargen im Labor hergestellt wurden:

### Beispiel 1

Aus dem Schweißdraht Sw08 (d.h. 0,08 % bis 0,12 % C) mit einem Mn-Gehalt von 0,37 % wurden Elektroden (Durchmesser 3 mm) in der Hülse (Durchmesser 4,4 mm) hergestellt. Daraus resultierte ein Koeffizient der Umhüllungsmasse von Km.p. = 41 %. Die Zusammensetzung der Umhüllung: Ilmenit 51 %, Marmor 10 %, Talk 8 %, Muskovit 10 %, FeMn 7 %, FeTi 12 %, Cellulose 1 %, eisenhaltige Komponente 1 %. Dadurch ergibt sich in der Elektrode ein Gesamtgehalt von Mn 2,5 %, Si 0,30 % und Ti 1,5 % aus dem Ferrotitan.

### Beispiel 2

Aus demselben Schweißdraht Sw08 wurden die Elektroden (Durchmesser 3 mm) in der Hülse (4,4 mm) hergestellt, wobei sich ein Koeffizient der Umhüllungsmasse von 41 % ergab. Die Zusammensetzung der Umhüllung beträgt: Ilmenit 45 %, Hämatit 6 %, Talk 10 %, Muskovit 13 %, Cellulose 5 %, Ferromangan 8 %, Ferrosilicium 13 %, Marmor 1 %. Damit ergibt sich in der Elektrode ein Mn-Gehalt von 2,8 % und ein Si-Gehalt von 2,1 %.

### Beispiel 3

Aus dem Schweißdraht Sw08GA (d.h. unter 0,1 % C) mit einem Mn-Gehalt von 0,90 % wurden Chargen von Elektroden (Durchmesser 3 mm) in derselben Hülse hergestellt. Die Zusammensetzung der Umhüllung der Charge: Ilmenit 51 %, Marmor 11 %, Talk 9 %, Muskovit 11 %, FeMn 5 %, FeTi 11 %, Cellulose 1 %, eisenhaltige Komponente 1 %. Dies ergibt in der Elektrode einen Gehalt von Mn 2,43 %, Si 0,32 % und Ti 1,37 %.

### Beispiel 4

Die zweite Charge von Elektroden aus dem Schweißdraht Sw08GA wies auf: Ilmenit 45 %, Hämatit 6 %, Talk 11 %, Muskovit 14 %, Cellulose 5 %, FeMn 6 %, Ferrosilicium 12 %, Marmor 1 %. Damit wurde ein Gehalt von Mn 2,75 % und Si 2,0 % in der Elektrode erreicht.

Alle vier Chargen von Elektroden wurden auf schweiß-technologische und mechanische Parameter des Metalls in der Schweißnaht geprüft. Die Bildung der Schweißnähte in allen räumlichen Lagen, Stabilität des Brennens des Lichtbogens, Abtrennbarkeit der Schlacke entsprachen voll und ganz den Anforderungen, die an die Rutilelektroden gestellt werden. Bezüglich der Abtrennbarkeit der Schlacke übertrafen die Prüfungsergebnisse diese Eigenschaft, bis zur Selbstabtrennung.

Die mechanischen Eigenschaften entsprachen den Anforderungen des Elektrodentyps E-46 gemäß russischer Industrienorm GOST 9467-75.

Als weitere Vorteile sind der geringere Verbrauch von teurem Ferromangan und die damit geringere Umweltbelastung durch Mangan zu nennen. Die Untersuchungen haben ergeben, daß der Mn-Gehalt in den Aerosolen beim Schweißen mit den Elektroden aus der ersten Charge (siehe Beispiel 1) um das 2,8-fache geringer war als beim Schweißen mit herkömmlichen Elektroden vom Typ MR-3.

Die erfindungsgemäßen Elektroden entsprechen somit voll und ganz den Anforderungen der Elektroden mit Rutilumhüllung. Jedoch werden die Eigenschaften der herkömmlichen Elektroden in folgenden Aspekten von den erfindungsgemäßen Elektroden übertroffen:
- Abtrennbarkeit der Schlacke;
- Umweltverträglichkeit;
- wesentlich niedrigere Herstellungskosten durch Verwendung von Ilmenit.

## Patentansprüche

1. Elektrode zum Schweißen von kohlenstoffarmen und niedriglegierten Stahlsorten mit einem kohlenstoffarmen und niedriglegierten Draht und einer Umhüllung enthaltend Carbonat, Silikate, TiO₂-haltige Komponenten, Cellulose, eisenhaltige Komponenten, Ferromangan und gegebenenfalls Ferrotitan, dadurch gekennzeichnet, daß die Umhüllung enthält
0 bis 15 %, vorzugsweise 1 bis 10 % Carbonat, 1 bis 25 %, vorzugsweise 8 bis 18 % Silikate, 1 bis 8 % Cellulose,
0 bis 12 %, vorzugsweise 4 bis 9 % eisenhaltige Komponenten sowie Ferromangan, Ferrosilicium, gegebenenfalls Ferrotitan und eine titandioxidhaltige Komponente, wobei die Elektrode einen Umhüllungsmasse-Koeffizienten von 32 bis 45 % aufweist, das Ferromangan in einer Menge vorhanden ist, daß ein Mangan-Gesamtgehalt in der Elektrode von 1,6 bis 3,0 % resultiert,
daß Ferrosilicium in einer Menge vorhanden ist, daß ein Silicium-Gesamtgehalt in der Elektrode von 0,3 bis 2,5 % resultiert und
daß Ferrotitan in einer Menge vorhanden ist, daß ein Titan-Gehalt in der Elektrode von insgesamt bis zu 1,5 % resultiert.

2. Elektrode gemäß Anspruch 1, dadurch gekennzeichnet, daß als eisenhaltige Komponenten Hämatit und/oder Magnetit und/oder Eisenpulver verwendet wird.

3. Elektrode gemäß Anspruch 1 und/oder 2, dadurch gekennzeichnet, daß als Silikat Muskovit und/oder Talk und/oder Phlogopit und/oder Kaolin verwendet wird.

4. Elektrode gemäß einem der Ansprüche 1 bis 3, dadurch gekennzeichnet, daß als Carbonat Marmor und/oder Magnesit und/oder Dolomit und/oder Kalk verwendet wird.

5. Elektrode gemäß einem der Ansprüche 1 bis 4, dadurch gekennzeichnet, daß als titandioxidhaltige Komponente Ilmenit verwendet wird.
